Europäisches Patentamt

European Patent Office

Office européen des brevets

(19)

(11) Publication number: **0 354 067**
**A2**

# EUROPEAN PATENT APPLICATION

(12)

(21) Application number: **89307998.8**

(22) Date of filing: **04.08.89**

(51) Int. Cl.⁵: **H 04 N 5/33**

(30) Priority: **04.08.88 US 228394    24.10.88 US 261913**

(43) Date of publication of application:
**07.02.90   Bulletin  90/06**

(84) Designated Contracting States: **BE DE FR GB NL**

(71) Applicant: **GEC AVIONICS, INC.**
**2975 Northwoods Parkway/Norcross P.O. Box 81999**
**Atlanta Georgia 30366  (US)**

(72) Inventor: **Givens, Gerald S. Jnr.**
**4941 Firth Lane**
**Atlanta Georgia 30360  (US)**

(74) Representative: **Tolfree, Roger Keith et al**
**The General Electric Co. p.l.c. Patent Department**
**GEC-Marconi Research Centre West Hanningfield Road**
**Great Baddow, Chelmsford Essex CM2 8HN  (GB)**

(54) Infrared spectral difference imager.

(57)   An infrared spectral difference imager capable of detecting and imaging an excess or deficit of infrared radiation having a preselected wavelength. The imager processes at least two channels of infrared radiation information through the sensor stage in order to display an image of the spectral differences present in the imager's field of view. The imager principles may be implemented in standard forward-looking infrared (FLIR) thermal imagers to obtain pictorial representations of the spatial distribution of sources and absorbers of infrared radiation within a preselected narrow band of infrared wavelengths. The spectral-difference detection capability may be added to scanning systems with discrete sensors, to scanning systems with TED or SPRITE sensors, and to staring array systems. Implementation techniques include a cost-effective manner of providing the time delays required to compare signals from the multiple energy channels and an automatic monitor and alarm system responsive to the strength of the difference signal.

Figure 1

EP 0 354 067 A2

**Description**

## INFRARED SPECTRAL DIFFERENCE IMAGER

**Technical Field**

The present invention relates generally to imagers for infrared radiation and relates particularly to improvements in imagers which enable the construction of images of the sources and absorbers of a particular preselected wavelength of infrared radiation within the imager's field of view.

**Background of the Invention**

Infrared radiation is electromagnetic radiation in a band of wavelengths longer than visible red light. The wavelengths of visible light range from 0.43 microns (1 millionth of a meter, abbreviated "$\mu$") for blue light to 0.69 microns for red light. The infrared region generally denotes those wavelengths from 0.7 $\mu$ to approximately 20 $\mu$. Because all material objects radiate energy in the infrared region, detectors for infrared radiation are particularly useful for ascertaining the presence of objects where the level of visible light is low, i.e., at night or in a dark room. Infrared radiation is also commonly referred to as "thermal radiation".

The universal presence of thermal radiation has led to the development of thermal sensors and thermal imagers. Thermal sensors are devices which sense, usually electronically, the amount of thermal radiation present. Thermal imagers are devices which incorporate thermal sensors and scanning electronics to produce images representative of the field of view of the imager, and are sometimes referred to as forward-looking infrared (FLIR) imagers. The image depicts the spatial variation of the intensity of infrared radiation within the field of view of the imager and is typically a monochrome image of varying gray scale. The brightness and darkness of a monochrome image corresponds to the variation in intensity of infrared radiation in the field of view. Infrared imagers which provide pseudo-color (false color) pictures, in which the color of an area corresponds to the intensity of the infrared emission from that area, are also well known. Thermal imaging devices are valuable in military applications because of their ability to detect objects in a completely passive manner, that is, it is not necessary to illuminate the objects with radiation in order to detect the objects. Thermal imaging devices have been developed to the point where they can produce images comparable in quality to a monochrome television image.

Thermal imagers are constructed by placing one or more infrared sensors in the focal plane of an infrared focusing device, or telescope. The telescope and the sensor define the instantaneous field of view. In the usual design, the sensors do not cover the overall field of view of the imager, and the complete image is formed by scanning the image across the sensors via an arrangement of moving prisms and or mirrors. The telescope and the motion of these mirrors determine the overall field of view of the imager, and consequently the scene seen by the imager. With the so-called parallel scanner, the image is generated by a horizontal motion of the scene across a large vertical array of sensors. These lines are stored in a memory and read out in a line-at-a-time sequence if a standard video television format output is desired. In this implementation, outputs from the sensors generate raster lines constituting a strip in a frame of television picture information. In the so-called serial scanner, a segment of the scene is moved horizontally across a horizontal array of sensors. The advantage of this technique is that the outputs from the sensors can be time delayed and integrated so as to improve the signal-to-noise ratio of the imager. The sensors may also be arrayed in a rectangular grid so as to benefit from both parallel and serial scanning methods. When this technique is carried to an extreme, the entire field of view of the imager is viewed simultaneously by sensors. No scanning is then necessary, and the sensor grouping is referred to as a "staring" array, since each element continuously stares at one specific area of the overall field of view.

In systems for scanning a portion of an image across a sensor or an array of sensors, techniques have been developed which permit the holding of the sensors stationary while scanning the image past the sensors, usually by movable optics within the infrared telescope or by reflecting the converging infrared beam by swiveling or rotating mirrors or prisms. Alternatively, the infrared image can be held stationary while the sensors are moved methodically throughout the entire image. For purposes of the present invention, these alternative scanning techniques are equivalent.

As described above, imagers have also been constructed where the array of sensors covers all of the field of view of the imager. The sensors in a staring array imager simultaneously view the entire scene defined by the field of view of the imager. In the typical staring array imager, the scene information is nevertheless gathered sequentially from the sensors in the array by enabling the sensor outputs to pass one at a time onto a signal line. The enabling circuitry is driven by a sequence of clocking pulses.

Sensors are typically cooled, solid-state devices such as cadmium mercury telluride which produce charge-hole pairs when illuminated with infrared radiation. Scanning-type imagers have been constructed using sensors elongated in the direction of the image sweep across the sensors. The charge induced in the sensor by the incident infrared radiation is moved from its point of creation to the trailing edge of the sensor by an applied electric potential. At the trailing edge the induced charge is provided to a sensor output terminal to make the sensor signal. Within certain limits, the speed of movement of the induced charge is proportional to the voltage gradient across the sensor. By adjusting the voltage bias across the sensor, the speed of movement of the induced charge may be made to coincide with the sweep speed of the image being scanned. This results in an amplification of the normally available sensor signal, as the charges induced in the sensor by infrared radiation from a given portion of the image continuously add to a growing packet of charges as they are moved across the sensor length in synchronism with the image sweep rate. At each successive point along the scan line in the sensor through which a given portion of the image is swept, charges proportional to the image's infrared intensity are added, and a collective, or amplified, signal is thereby produced at the trailing edge of the elongated sensor. The signal produced at any instant in time is thus representative of the given portion of the image. Sensors of this type, originally called "Tom Elliot Devices", after their inventor, are also known as "TED sensors". TED sensors are also known and referred to as Signal-PRocessing-In-The-Element, or SPRITE, sensors.

Thermal sensors are sensitive fairly uniformly to infrared radiation over a range of wavelengths or bandwidth. Within this bandwidth, the typical prior art thermal imager provides no information regarding the spectral content (i.e., the relative intensity as a function of wavelength) of the infrared radiation detected. The typical prior art thermal imagers, incorporating prior art thermal sensors, are thus sensitive only to the intensity of infrared radiation and the direction of the radiation. Therefore, improvements in the quality of previous sensors and imagers have depended upon improvements in ability to distinguish between different total amounts of radiation received per unit of time (so-called thermal resolution) or upon improvements in ability to distinguish angular direction within the field of view (so-called spatial resolution).

Certain materials are known to be strong absorbers or radiators of infrared radiation at particular wavelengths. However, very few attempts have been made to allow imagers to analyze spectral content or to distinguish objects on the basis of the particular wavelength of infrared radiation emitted. The attempts which have been made have generally involved placing an infrared filter in the signal path of an imager and observing what, if any, differences were present in the filtered image as compared with the unfiltered image. This technique has many drawbacks, among them the necessity of changing filters, the lack of ability to detect two different wavelengths at a single instant of time, and the inconvenience and delay associated with producing and comparing two separate images.

## Summary of the Invention

The present invention is an apparatus and method for obtaining and comparing two signals, one representative of filtered infrared energy and the other representative of differently filtered or unfiltered infrared energy, so that the compared signals are usable to generate an image of the infrared spectral differences present in a scene within the imager's field of view. It uses the invention described in co-pending application filed on the same date as the present application in conjunction with a standard thermal imager to provide a capability of distinguishing objects and chances in objects in a scene by wavelength-dependent characteristics.

The invention provides at least two infrared energy signal paths or channels which are processed and compared in order to detect distributions of infrared radiation which differ from the normal blackbody distribution or which differ from a reference signal. If one of the energy channels is filtered to permit passage of energy only at the emission or absorption frequency of a particular target of interest, the present invention will provide an image of the locations of that target.

Thus, one of the objects of the present invention is to provide an apparatus and method for detecting an excess or deficit, relative to blackbody-predicted amounts, of infrared radiation having wavelengths within a narrow preselected band.

Another object of the present invention is to provide an apparatus and method for improving the signal-to-noise ratio in a detector for detecting an excess or deficit, relative to blackbody-predicted amounts, of infared radiation having wavelengths within a narrow preselected band.

Another object of the present invention is to permit the passive detection of gases through the sensing of a deficit or surplus of energy in narrow spectral bands within the 8 to 13 micron region of the infrared spectrum, the bands being sensed corresponding to absorption or emission bands of the target gases.

Another object of the present invention is to provide an apparatus and method for allowing the same sensors to function as a reference signal source equivalent to that taken through a neutral density filter, a primary signal source, or both.

Another object of the present invention is to provide an apparatus which uses infrared filters preceding infrared sensors in the optical path, the infrared sensors being in the same optical plane as reference sensors (either differently filtered or unfiltered) and spaced perpendicular to the scan direction. Objects in the image plane which are large relative to the spacing of the sensors will be seen simultaneously by both types of sensors (reference and non-reference) thus allowing comparisons of the two different spectral views being taken of the same object by the two types of sensors.

Another object of the present invention is to provide an apparatus which uses infrared filters preceding infrared sensors in the optical path, the non-reference sensors being in the same optical plane as the reference sensors (either differently filtered or unfiltered) and trailing (or leading) in the scan direction. A delay network suitably related to the scanning rate will allow comparisons of the two different spectral views being taken of the same object by the two types of sensors.

Another object of the present invention is to provide an apparatus and method for delaying an electronic signal by a constant or variable amount of time.

Another object of the present invention is to provide an alarm system for automatically monitoring the amount of spectral differences present in a scene.

Another object of the present invention is to permit the passive imaging of gases through the sensing and imaging of a deficit or surplus of energy in narrow spectral bands within the infrared spectrum, the bands being sensed corresponding to absorption or emission bands of the target gases.

Another object of the present invention is to provide an apparatus which can be added to an existing infrared thermal imager, thereby adding a spectral difference detection capability at moderate cost compared to the cost of the thermal imager.

These and other objects, features and advantages of the present invention will become apparent upon reading the following specification, including the appended claims, in conjunction with a review of the drawings.

## Brief Description of the Drawings

Figure 1 is a block diagram of one embodiment of the present invention wherein the two sensors are illuminated simultaneously.

Figure 2 is a graph depicting examples of the various choices for the infrared passbands of the filters employed in the present invention.

Figure 3 is a block diagram of another embodiment of the present invention wherein the two sensors are illuminated sequentially.

Figure 4 is a block diagram of another embodiment of the present invention showing the modifications and additions to a prior art eight-sensor imager so that pairs of sensors are illuminated simultaneously.

Figure 5 is a block diagram of another embodiment of the present invention showing the modifications and additions to a prior art dual eight-sensor imager so that pairs of sensors are illuminated simultaneously.

Figure 6A is a block diagram of another embodiment of the present invention showing the modifications and additions to one pair of sensors of a prior art multiple-sensor imager so that pairs of sensors are illuminated sequentially.

Figure 6B depicts a variation of the embodiment of the present invention shown in Figure 6A which enables simultaneous viewing of spectral-difference images with normal images.

Figure 7 is a block diagram of another embodiment of the present invention showing the modifications and additions to a prior art dual eight-sensor imager so that pairs of sensors are illuminated sequentially and the delays for the signals from the first sensor set are provided by selected sensors in the second sensor set.

Figure 8 depicts a variation of the embodiment of the present invention shown in Figure 7 wherein the delays are provided by clocked shift registers.

Figure 9 depicts the arrangement of sensors in a typical staring-array infrared imager.

Figure 10 is a block diagram of an embodiment of the present invention wherein alternate sensor rows of a staring-array imager are filtered.

Figure 11 is a block diagram of another embodiment of the present invention wherein alternate sensor columns of a staring-array imager are filtered.

## Detailed Description of the Preferred Embodiments

### Scanning Imagers

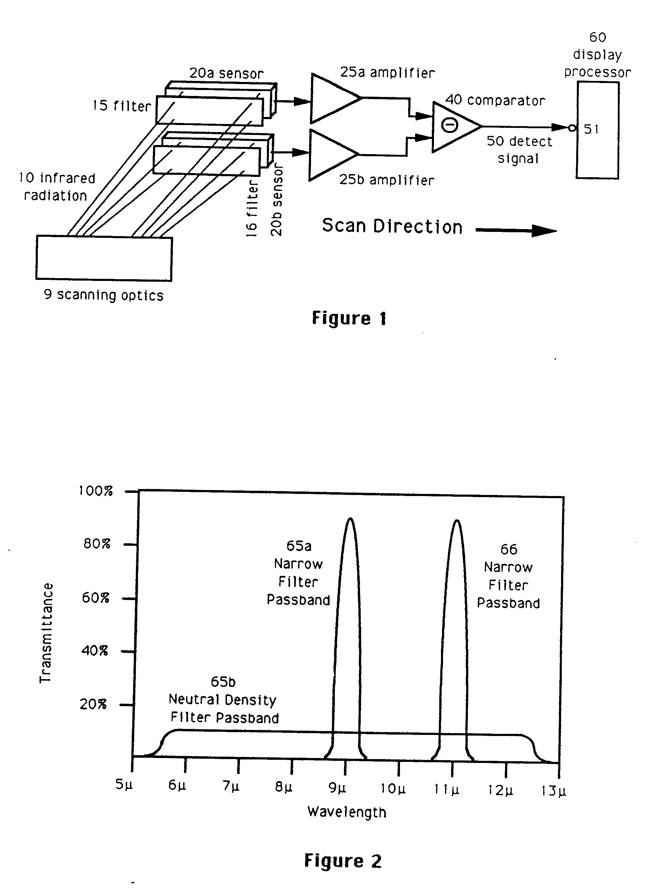

Referring now in more detail to the drawings depicting the invention, in which like numerals indicate like elements throughout the several views, Figure 1 depicts a block diagram of one embodiment of the present invention wherein a thermal imager with infrared scanning optics 9 causes infrared radiation 10 to be scanned across an infrared sensor 20a. In a thermal imager not incorporating the present invention, the output from the sensor 20a would be amplified by amplifier 25a and provided to point 51 for storage or display by the imager display processor 60. The remaining elements of Figure 1 are the additions which are made to the thermal imager to enable it to display infrared spectral differences. A second sensor 20b is placed in the image plane in a manner so that infrared radiation from an element of the scene being scanned will strike sensor 20b at the same time as it strikes sensor 20a. An infrared filter 16 is placed in front of infrared sensor 20b. An additional infrared filter 15 may be placed in front of sensor 20a, or it may be left unfiltered. The signal from sensor 20a is provided to amplifier 25a, and the signal from sensor 20b is provided to amplifier 25b. For ease of operation and maximum flexibility, either or both of these amplifiers may be provided with a variable gain control and a switch which also allows shunting the signal around the amplifier or setting the amplifier gain to 1.0. The outputs from each of the amplifiers 25a and 25b are provided to signal comparator or signal subtractor 40. The output 50 from the signal comparator 40 is provided at point 51 to the display processor 60, replacing the output from amplifier 25a in the unmodified imager.

It should be noted that the comparator 40 could equivalently be a signal window comparator, a signal subtractor, a signal inverter on one input line followed by a signal adder, and other signal comparison techniques known to those skilled in the art.

It is important that both sensor 20a and sensor 20b be illuminated simultaneously with infrared radiation from the instantaneous view direction of the imager telescope. in this embodiment, if the focus of the telescope in the unmodified imager and the edge sharpness of the object of interest is such that the image of the object edge does not extend past the geometrical boundaries of sensor 20a, it may be necessary to slightly defocus the telescope so that both sensor 20a and sensor 20b will receive a portion of the image of the object edge. Other embodiments are described below which do not require this defocusing even for objects with sharp boundaries.

Filter 16 is matched to a spectral line of interest within the infrared band of energy. It is typically a narrow-band filter or a filter/sensor combination with high transmission within the passband and low transmission outside of the passband.

Filter 15, if employed, can be of two types: it may be a narrow bandpass filter or a neutral density filter which attenuates all wavelengths within the infrared band equally. In the first instance, the narrow bandpass filter 15 should pass frequencies of a different wavelength from those passed by filter 16. The wavelength selected should complement the passband of filter 16 such that the difference signal provides information about objects of interest. For example, filter 16 might be matched to an absorption band of a gas or to an emission peak of a paint coating on a desired target object. Filter 15 would pass wavelengths away from this absorption band or emission peak. Filter 15 might also be matched to a different material absorption or emission peak if desired.

The types of passbands for filters 15 and 16 are shown in idealized form in Figure 2. Filter 15 may have a narrow passband 65a or a neutral density passband 65b. Filter 16 may have a passband 66. The center wavelength of the passbands shown in Figure 2 are given by way of example, and other center wavelengths may be used to achieve the desired effect. However, whatever the center wavelength, if the area under the bandpass curve for filter 15, weighted by the blackbody emission curve, lens characteristics, and sensor wavelength-sensor sensitivity curve, does not match the area under the bandpass curve for filter 16, similarly weighted, then the gains of amplifiers 25a and 25b must be adjusted, or normalized, so that the signal comparator 40 gives a null or zero output when no spectral differences are present. Filter 15 may be omitted (within the limit such that circuit response remains linear, i.e., the sensor or its associated amplifier does not saturate), in which case an "artificial neutral density" or "AND" filter may be obtained by decreasing the gain of amplifier 25a, which simulates the effect of placing a neutral density filter in the optical path to sensor 20a. A similar effect may be obtained by increasing the gain of amplifier 25b rather than decreasing the gain of amplifier 25a. In the latter case, an improved signal-to-noise ratio may also be achieved. The selection of filters and gain settings is disclosed in greater detail in co-pending application Serial No. 228,394, which is incorporated herein by reference.

The edges of the passband 65b of filter 15 can extend up to and past the limits of the sensor passband imposed by the other imager system limitations. The percent transmission is decreased as the passband is increased in order to maintain an equal output signal from the combination of filter 15 and sensor 20a as compared with the output signal from the combination of filter 16 and sensor 20b when the scene being observed is "bland". A scene is "bland" when the incoming radiation does not have any unusual energy content or lack of content in the passband of filter 16, such as would occur if the target material were present in the scene.

With either passband 65a or passband 65b, the output of the comparator circuit would be zero (noise only) until a spectral difference in scene content at passband 66 (or at passband 65a, if present) occurred. Thus the comparator output would be non-zero only when target materials are present in the scene.

The filter characteristics 65a, 65b, and 66 of the sensor filters may be varied over their respective passbands to compensate for variations in the inherent sensitivity of the filter/sensor combinations. Also, the gains of the amplifiers 25a and 25b may be adjusted to assist in achieving a zero or null output for a bland scene and a maximum output in the presence of the target material.

The basic components of Figure 1 may be replicated to provide a multiple sensor array whereby the number of sensors is adequate to provide filter/sensor characteristics similar to the passbands 65a and 66 across the full spectrum of wavelengths which can be processed by the remaining imager system elements. If the passbands are immediately adjacent in wavelength, this would provide a full band spectrometer with wavelength discrimination being the same as that of the selected filter passband.

The embodiment of Figure 1 sacrifices vertical resolution for bandwidth discrimination. The circuit of Figure 1 is appropriate for objects that are large enough to have their image cover both sensor 20a as well as sensor 20b at the same time and for a duration of time sufficient to produce a signal processible by the remaining elements of the infrared imager. It will be recognized that edge effects will occur whenever one filter/sensor combination receives energy from an object within the field of view and the other filter/sensor combination receives no energy from the object. This would cause the comparator 40 to have an output even for non-target objects where the object and the background differ in the amount of infrared energy emitted. These edge effects must be discriminated against in another fashion, such as by placing integrators at the comparator 40 outputs or post-processing video algorithms to eliminate edges, as those skilled in the art will appreciate. One easily implemented technique is for the sensors to be placed far enough out of the sharp focus plane (surface) as to blur the edges relative to the sensors. This, of course, sacrifices spatial resolution. For many applications, no effort to exclude the edge effects is necessary; the operator can recognize these effects in the resulting image and discount them from experience.

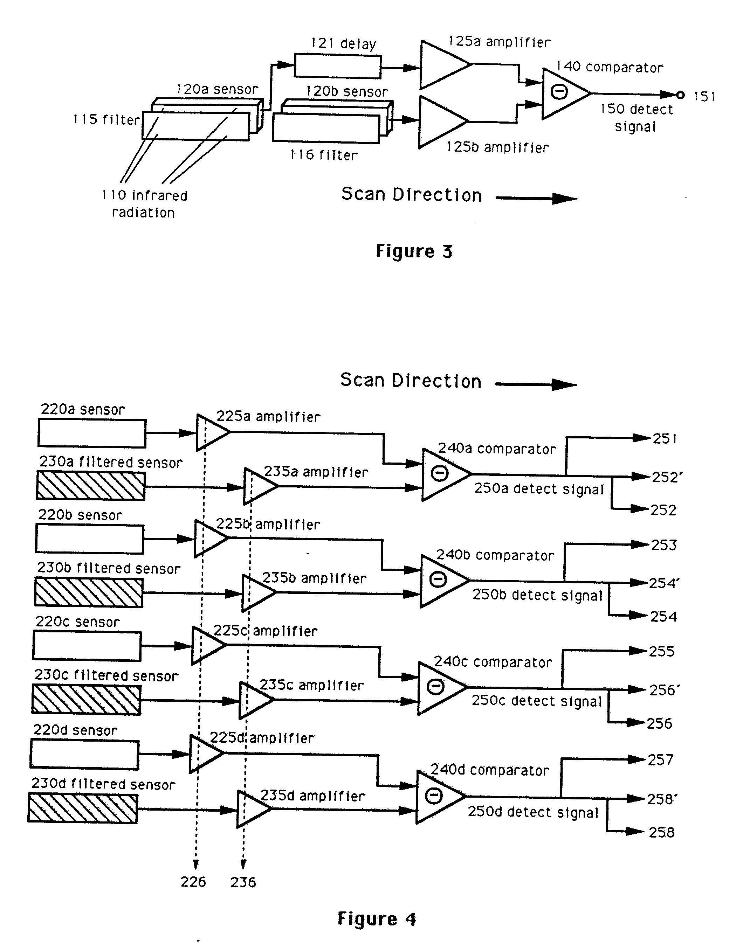

Another embodiment of the present invention is shown in Figure 3. In this embodiment, sensor 120b and its associated filter 116 are placed adjacent to sensor 120a and its associated filter 115 and in trail in the scan direction. The incoming infrared radiation 110 first illuminates sensor 120a and then sensor 120b. In order to compensate for the time difference of the outputs from the two sensors 120a and 120b, the output from sensor 120a is first provided to a time delay 121, which retards the signal until the corresponding signal is available from sensor 120b. Filters 115 and 116, amplifiers 125a and 120b and comparator 140 are all used in the manner described for the corresponding elements of the embodiment of Figure 1.

The embodiment of Figure 3 has the advantages of providing better vertical spatial resolution and of eliminating the edge effects mentioned above and any associated requirements on objects size or for post-processing circuits or algorithms, at the cost of the added complexity and some possible signal smearing of the delay circuit. The delay time of delay 121 is equal to the time required to move an image point from the trailing edge of sensor 120a to the trailing edge of sensor 120b. With this delay time, the signal output from the comparator 140 is a zero for bland scenes, regardless of the edge effects and overall intensity variations. The only exception is for target motion in the scene sufficiently fast relative to scan speed as to cause one sensor to perceive the target differently than the other sensor. This is by nature a fleeting event and can, if necessary, be discriminated against by time integration over several frames of the image produced. For many type scanners, the speed required to produce undesirable side effects is far greater than that likely to occur with real world objects.

The present invention may be implemented in a thermal imager of the TED type, such as the TICM II thermal imaging system manufactured by GEC Sensors Limited, Basildon, Essex, United Kingdom, by covering alternate TED sensors in the imager with narrow bandpass filters, as shown in Figure 4. The TICM II system is an eight channel device having eight TED sensors feeding eight channels 251, 252, ... 258 of display information. The eight TED sensors, with alternate sensors covered with filters, are shown as elements 220a, 230a, 220b, 230b, 220c, 230c, 220d, and 230d. Looking at the top pair of TED sensors 220a and 230a in Figure 4, unfiltered sensor 220a and filtered sensor 230a are amplified by amplifiers 225a and 235a, respectively. The amplified outputs are furnished to comparator 240a to produce a detect signal 250a. The detect signal is provided both to channel one 251 and channel two 252 of the TICM II imager. Successive pairs of sensors 220b and 230b, 220c and 230c, and 220d and 230d, are processed in analogous fashion by circuit elements corresponding to those for the first two channels and provide detect signals for the remaining six channels. Gang switch 226 can set the amplifier gain to unity for each amplifier 225a, 225b, 225c and 225d for the unfiltered sensors. Gang switch 236 can set the amplifier gain to zero for each of the remaining amplifiers 235a, 235b, 235c and 235d. By setting both switches, the comparators 240a, 240b, 240c and 240d each subtract zero from the normal unfiltered sensor information, and the TICM II imager operates as if it were not modified to detect spectral differences (except that its vertical resolution is reduced by a factor of two).

The gang switches 226 and 236 may also operate as gang controls to adjust the variable gain of the amplifiers ganged together. Such gang control will facilitate the overall adjustment of the spectral difference imager to meet the normalization requirement set forth above in the discussion for Figure 2. Individual amplifier gain controls may also be necessary to prevent streaking in the displayed image.

The embodiment of the present invention depicted in Figure 4 is ideal for a minimum-change retrofit. It decreases vertical resolution of the unmodified imager by a factor of two while leaving horizontal resolution unaffected. The number of different narrow bandpass filters can be increased to seven (7) and only one unfiltered sensor used (reducing vertical resolution to 1/8th of the original) or only one narrow bandpass filter can be used, with a small affect on the vertical resolution of the basic scanner and a spectral discrimination resolution of only one narrow band. The narrow bandpass filters can be of all the same type or up to seven (7) different passband characteristics, depending on the number of spectral bands of interest versus the size of the target object. New connection points 252′, 254′, 256′, and 258′ paralleling the old channel connections would permit signal processing variations. The ability to instantly switch, using gang switches 226 and 236, between spectral difference operation and normal operation enhances the ability of an operator to evaluate and to track spectral-difference targets against the scene background.

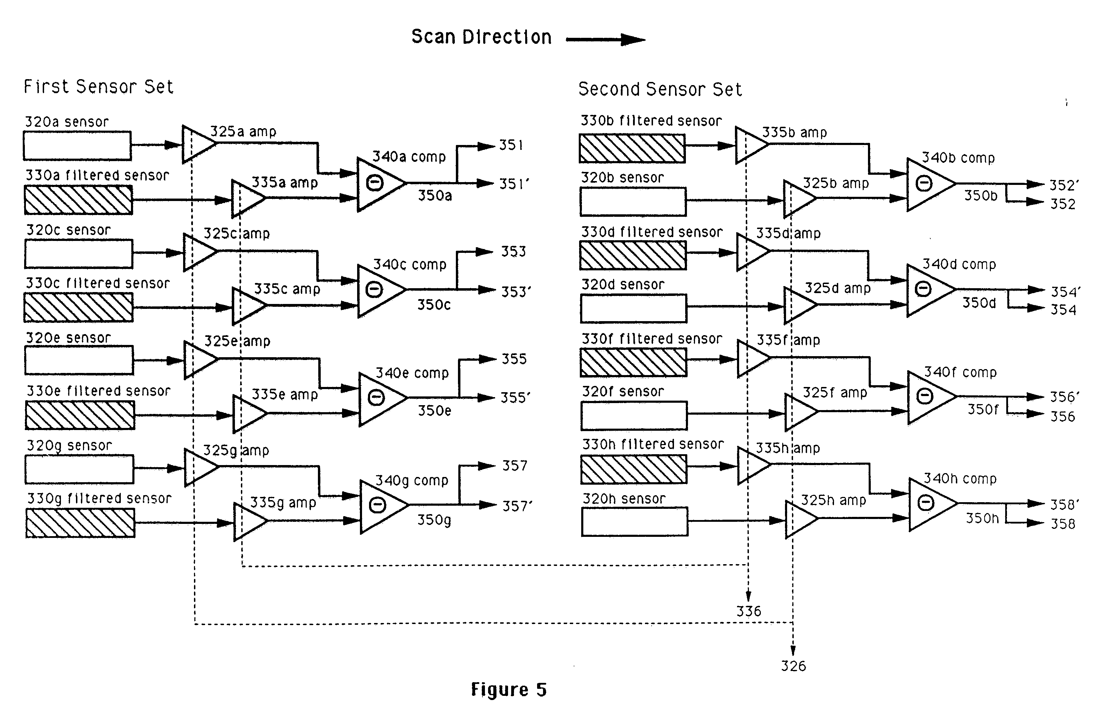

A special version of the TICM II imager has dual eight-sensor sets arranged in trail in the scan direction. The present invention may be embodied so as to use both eight-element TED sensor arrays in this version of the TICM II imager, as shown in Figure 5. The first eight-element detector operates precisely as the eight-element detector of Figure 4, except that the outputs feed channel one 351, channel three 353, channel five 355, and channel seven 357 only. The even-numbered channels 352, 354, 356, and 358 are supplied by the second eight-element detector, which lies in trail in the scan direction to the first eight-element detector. In the second eight-element detector, the TED sensors are alternately filtered in the reverse order from the order for the first eight-element detector. Reversing the order of filtration restores the full resolution to the TICM II imager when the filtered sensors are shut off.

The delay engendered by the location of the second eight-element detector in trail in the scan direction to the first eight-element detector may be compensated for by the transient storage shift registers provided in the TICM II imager. This is accomplished by using the clocking circuits of the analog or digital shift registers associated with each sensor to construct the final video signal in both the filtered and non-filtered modes. The sensor elements connected to the even channels are scanned through any particular scene point at a time delayed from the time that point passed through the odd numbered channel sensors. Compensation for this delay is achieved without the use of additional time delay networks. The clocks which step data into the even shift registers (analog or digital, depending upon the particular implementation of the thermal imager) are not allowed to start until a time increment equal to the delay time has elapsed since starting the clocks for the odd numbered channels. Data is clocked out of the shift registers in exactly the same fashion as previously used in the prior art TICM II processor.

The staggering of the unfiltered sensors vertically between the two TICM II groups leads to a reconstructed picture which has identical information and resolution to that provided in a normal system when the unfiltered sensors are switched to full gain and the filtered sensor amplifiers are switched to zero by means of gang switches 326 and 336, respectively.

The circuits of Figures 4 and 5 are both replications of the circuit in Figure 1, with the advantages and limitations described above for that circuit.

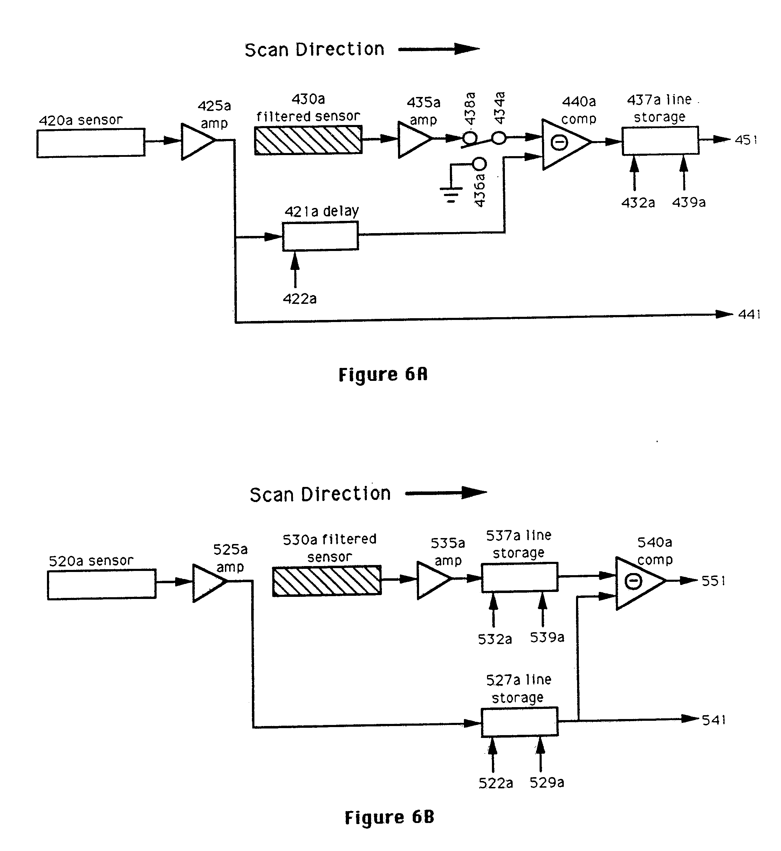

Replications of the circuit of Figure 3 are also possible, with at least two basic variants. The first variant utilizes only the existing video line storage registers of a typical imager (as the circuit of Figure 4 uses the existing TED sensors only). The second variant doubles the number of storage registers and provides an increased capability. The first variant is shown in Figure 6A, and the second variant is shown in Figure 6B.

Figure 6A shows, by way of example, only the top row of sensors in a dual eight-element TED detector such as that found in the TICM II imager. The first eight-element sensor array contains sensors 420a, 420b, ... and 420h, of which only sensor 420a is shown in the drawing. The output from sensor 420a is amplified by amplifier 425a and provided to an analog delay shift register or other delay circuit 421a. The delay 421a may be controlled by input clock 422a. Filtered sensor 430a, in trail in the scan direction to sensor 420a, provides a signal to amplifier 435a, the output of which is provided to one throw position 438a of a single pole 434a, double-throw switch. The other throw position 436a of the switch is grounded, and the switch is ganged to like switches throughout the eight-element detector. The signal from the pole 434a of the switch and the output from the delay shift register 421a are provided to comparator 440a. The output from comparator 440a is supplied to video line storage shift register 437a, controlled by input clock 432a and output clock 439a. The output from line storage register 437a is clocked into channel one 451 of the TICM II imager. Elements analogous to those shown in Figure 6A are replicated to provide signals for the remaining channels two 452 through eight 458.

It is noted that unfiltered sensors 420a, 420b, ... 420h of the full eight-element detector enable a modified imager to operate as if it were not modified. This is accomplished by setting the throw of the ganged switch to positions 436a, 436b, ... 436h so that the comparator subtracts nothing from the unfiltered sensor signals. Alternatively, new channel one through channel eight taps 441, 442, ... 448 for normal-signal display processing may be provided directly from the outputs of the amplifiers 420a, 420b, ... 420h for the unfiltered sensors.

In operation, delays 421a, 421b, ... 421h provide time delays for the unfiltered sensor signals so that the unfiltered sensors' signals and the filtered sensors' signals arrive at the comparator network 440a, 440b, ... 440h at the same moment for any given scene pixel. The delays 421a, 421b, ... 421h can be provided with the line storage registers' input clock signals 432a, 432b, ... 432h, if desired, for synchronization. The delays 421a, 421b, ... 421h can be also digital shift registers if analog-to-digital converters are added. In this case, the data and the comparator would also be digital.

The embodiment of Figure 6A may be modified to that of Figure 6B so that the imager can simultaneously operate in the spectral-difference detection mode even while it is functioning in its full normal capability mode. This is accomplished by replacing the delay circuits of Figure 6A with additional video line storage registers 527a, 527b, ... 527h in the unfiltered signal line and using these registers to delay the signal comparison until after the filtered signals are clocked out of their respective storage registers 537a, 537b, ... 537h. The outputs from the added storage registers 527a, 527b, ... 527h are also fed to new channel one through channel eight taps 541, 542, ... 548, for normal-signal display processing, while the spectral-difference detect signals from comparators 540a, 540b,... 540h are passed to channel one through eight 551, 552,... 558, respectively, for spectral-difference display processing.

In operation, clocks 532a, 532b, ... 532h for filtered-element line storage are delayed (offset by a number of clock pulses) relative to clocks 522a, 522b, ... 522h for the unfiltered elements so that the unfiltered-element line storage registers 527a, 527b, ... 527h, when full, contain an image of the same strip of scene as the filtered-element line storage registers 537a, 537b, ... 537h. Input clocks are stopped for each register when each register is full. The registers' contents are then clocked out simultaneously by output clocks 529a, 529b, ... 529h and 539a, 539b, ... 539h so that the scene pixel information from both the filtered and unfiltered sensors arrive at the comparator network 540a, 540b, ... 540h at the same moment for any given scene pixel. Alternatively, with longer shift registers, the output clocks 539a, 539b, ... 539h may be delayed relative to output clocks 529a, 529b, ... 529h rather than delaying the input clocks. Thus, with the addition of another eight-channel display processor to the new channel taps 541, 542, ... 548, this implementation enables the normal and the spectral-difference images to be viewed simultaneously, in a side-by-side fashion.

The line storage registers 527a, 527b, ... 527h and 537a, 537b, ... 537h can be digital if analog-to-digital converters are added. In this case, the data and the comparators would also be digital. As those skilled in the art will recognize, random access memory may also be used instead of storage registers with address offsets corresponding to the registers' delay function.

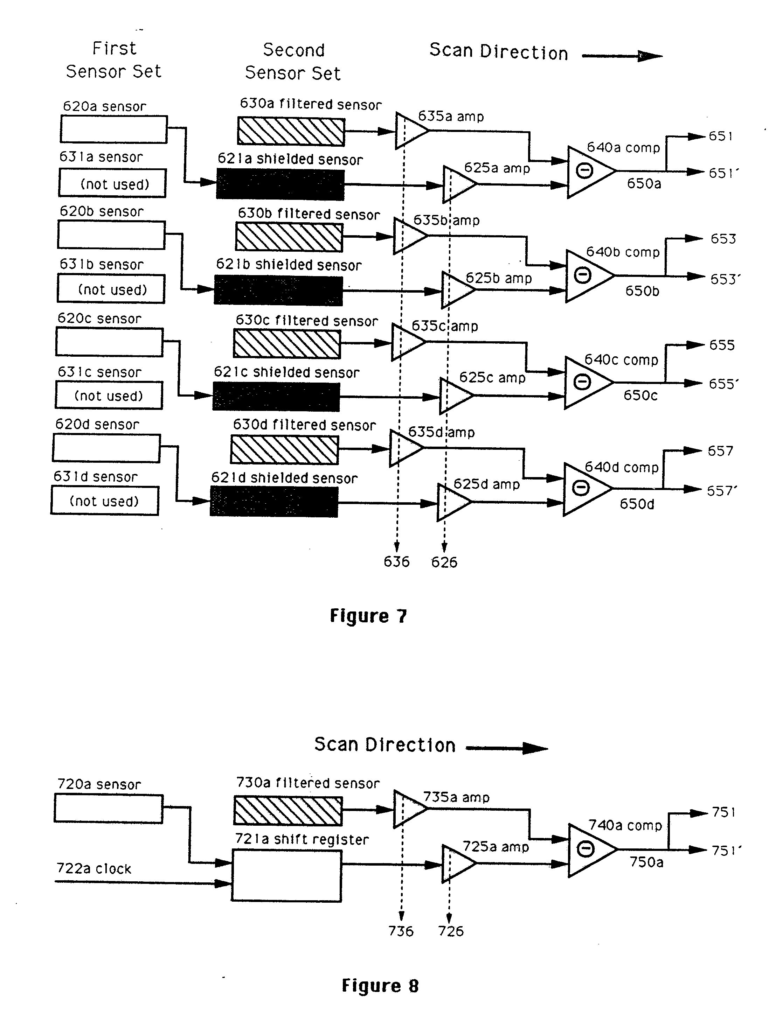

Figure 7 depicts another embodiment of the present invention, wherein the delay function is implemented with TED sensors. As shown in Figure 7, the outputs from the unfiltered sensors 620a, 620b, ... 620d are provided to non-illuminated TED sensors 621a, 621b, ... 621d adjacent to and immediately below the filtered TED sensors. A simple way of providing non-illuminated TED sensors is to shield alternate TICM II sensors from infrared radiation. The voltage gradient in the non-illuminated TED sensors must be somewhat less than that in the illuminated sensors, so that the signals from the unfiltered sensors reach the comparators **640a, 640b, ... 640d** at the same time as the signals from the filtered sensors **630a, 630b, ... 630d**. In this embodiment, since the outputs from the filtered sensors and the outputs from the unfiltered sensors are compared without using the clocked delay circuits in the TICM II processing electronics, the comparison circuitry may be placed in the scanner head and cryogenically cooled to reduce noise. This would eliminate the need for changes to the processing electronics in the standard thermal imager system. It is seen also that the embodiment of Figure 7 eliminates the need for delay register circuits such as, for example, delays **421a, 421b, ... 421h** associated with the circuitry illustrated by Figure 6A.

Note that in Figure 7, the shielded (non-illuminated) sensors **621a, 621b, ... 621d** are shown as being physically somewhat longer than the filtered (illuminated) sensors **630a, 630b, ... 630d**. This is necessary only if the same voltage bias supply which provides a voltage gradient to the filtered sensors is used to provide an equal voltage to the shielded sensors, and the other filtered-sensor parameters are also equal to those of the shielded sensors. With the same voltage and a longer sensor, the voltage gradient is less and the transit time is longer. Thus with appropriate adjustment of the shielded sensor length, the transit time across the shielded sensor is made equal to the filtered-sensor transit time plus the dead time associated with scanning a scene element from the trailing edge of the unfiltered sensor to the leading edge of the filtered sensor. An alternative approach is to lower the minority carrier velocity in the shielded sensor by lowering the bias voltage supplied to it. With this approach, TED sensors of the same length for both the filtered sensor and the shielded sensor will function equivalently.

In actual practice, the relationship between the length of the illuminated (filtered) sensor and the length of the non-illuminated (shielded) sensor will be dictated by the factors other than the voltage bias. For instance, the sensor parameters for the illuminated sensors include exposure time and other considerations having no bearing on the non-illuminated sensors' design. The major criteria for length selection in the non-illuminated sensor would be minimum signal loss caused by carrier recombination, minimum signal smearing (high frequency loss due to carrier dispersion), and minimum noise addition. By controlling the D.C. voltage level imposed on the sensor (via a potentiometer or a digital-to-analog converter), the transit time delay can be adjusted to compensate for manufacturing tolerances in the sensor itself or in other elements of the system.

Further uses of the TED sensor are possible when it is used in a fashion where a signal is injected at one end and is recovered at the other end. The rate of travel (sweep rate) of the induced charge across the sensor at any point in time is controlled by the voltage gradient seen by the induced charge at that time. If a bias voltage having a variable waveform is placed on the sensor, it can be used to dynamically adjust the overall delay through the sensor in synchronism with some externally-desired function. The sensor then becomes a controlled drift-rate device. An example of the use of a controlled drift-rate device is to provide compensation for differences in the scan time between filtered and unfiltered elements dependent on the area of the imager field of view being scanned. This is achieved by making the drift rate control voltage a function of the horizontal and vertical scan control voltages within the scanner head of the thermal imager. As for another example, a relatively high frequency injected voltage can be phase modulated by using a lower frequency input for the drift-rate control voltage. A third example is a variable delay line.

The circuit of Figure 7 can also be implemented by using short shift registers of the clocked analog type, preferably contained within the scanner head for the thermal imager system. Figure 8 depicts the embodiment wherein analog shift registers **721a, 721b, ... 721d** replace an non-illuminated TED sensor for the delay function. The same clocks **722a, 722b, ... 722d** that would, in a normal processor unit, clock an entire video line into a register could be used to clock these shorter registers. The clocking rates must be the same if the register cells are the same equivalent spatial size. This approach will still yield the major advantages of Figure 7. The shift registers **721a, 721b, ... 721d** would be very short compared to those required to store entire video lines as the processor unit. The outputs of the scanner head can be fed into the normal inputs **751, 752, ... 754** of an essentially unmodified processor or electronics unit.

Conversion of any of the analog signals to digital at various points in any of the previous circuits could be accomplished, as those skilled in the art will appreciate. This shift registers could become digital shift registers or even direct random access memory storage. The subtracters would then be digital devices. The variable gain amplifiers would then become multiplication factors under software control. Frame-to-frame summations, averaging and other processing techniques can also be used. Addressing offsets could replace the delay shift register function.

Staring Imagers

The present invention is not limited to scanning imagers, but may also be employed in staring array imagers. Staring arrays of sensors are not scanned but are exposed for a period of time and their contents are periodically sampled, most usually by clocking through a sampling point in line-by-line order.

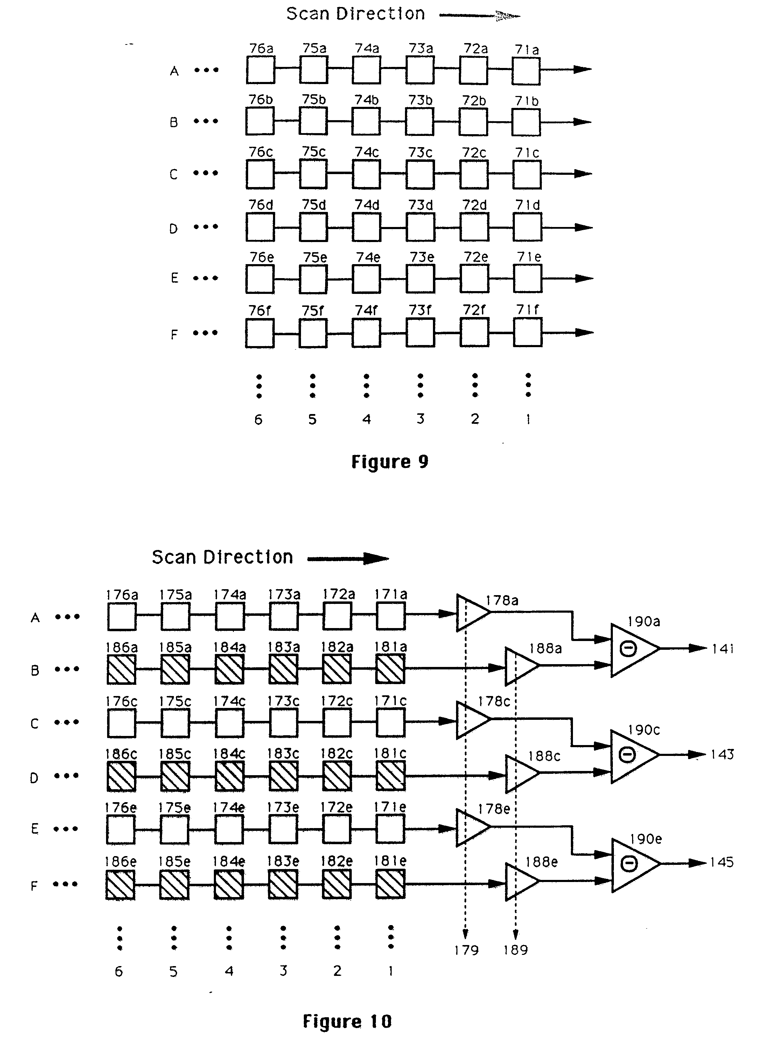

A representation of typical prior art staring array is shown in Figure 9. Infrared sensors **71a, 72a, ...** comprise row A, infrared sensors **71b, 72b, ...** comprise row B, etc. An array of this type is typically read out by first clocking the contents of row A by a sampling point, in column order 1, 2, 3 etc., followed by row B contents, etc. The sampled output is a video signal which is typically used to reconstruct a picture of the scene (imaged upon the array) on a television type monitor.

To modify this array so as to embody the present invention, the alternating rows, or groups of rows, of the array are covered with different filters. The remaining rows may be differently filtered or remain unfiltered. Unfiltered rows offer the flexibility of a return to normal operation as an infrared imager. In the present description, unfiltered rows will be assumed, although it will be recognized that the principles of the spectral difference imager are the same for rows of differently filtered sensors.

As shown in Figure 10, rows A, C, E, G, etc. of unfiltered sensors 171a, 172a, etc. are alternated with rows B, D, F, H, etc. of filtered sensors 181a, 182a, etc. All elements within a row are filtered for the same spectral sensitivity in this embodiment. Hybrid systems with the columns containing different filter types are also possible. A filtered row is paired with an unfiltered row, for example, A with B, and their outputs are clocked simultaneously into a subtractor network with amplifiers 178a and 188a and comparator 190a to form a single line of video signal. In this embodiment, the focusing optics of the staring array system must ensure that each column-wise pair of sensors in rows A and B be illuminated by infrared radiation from essentially the same scene element. The output 141 of the subtractor 190a takes the place of the first row's output in the prior art staring array system. The remaining pairs of rows operate analogously, so that the number of lines of display information is reduced by a factor of 2. The loss of resolution due to working with paired lines can be accepted or the number of sensitive rows can be doubled to compensate.

In operation, the output of each paired row is zero (noise only, barring edge effects) unless the spectral imbalance for which the filter was tuned existed in the scene images on the row (the complement spectral imbalance would result in a negative signal). A stronger and stronger signal is developed as the strength of the imbalance increases.

For a return to normal operation as a typical prior art imager, the gain of the amplifiers for the unfiltered sensors is increased back to normal by gang control 179, the gain of the filtered row of amplifiers is switched to zero by the gang control 189, and the output of the subtractor output becomes a single line of video exactly equivalent to that of the normal, unmodified imager, but with one half of the vertical resolution of the unmodified imager.

Three row-pairs of this embodiment are shown in Figure 10. The amplifiers 178a, 188a, etc., and subtractors 190a, etc., can be either replicated, as shown, or all row-pairs may use only one amplifier/subtractor circuit, as noise, switching circuit, and complexity considerations dictate.

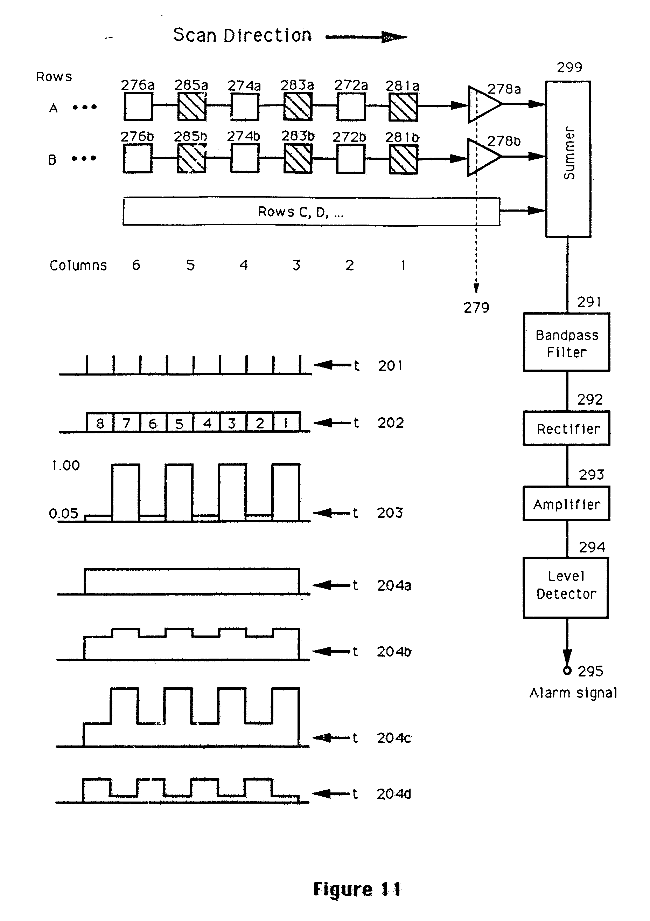

An alternative staring array embodiment employs columns-wise filtering of the array in analogy to the circuit shown in Figure 3. In this embodiment, shown in Figure 11, alternate columns of sensors 281a, 283a, 285a, etc., are filtered with the interleaved columns of sensors 272a, 274a, 276a, etc., having neutral density filters or being unfiltered. In the unfiltered case, the column wise alternation of filters would require that each amplifier 278a, etc., at the sampling point for each row be gain-switched at a rate equal to the rate at which new sensor element information is being passed (clocked) by the sampling point. As an example, if the narrow bandpass filter passes 5% of the energy present in a "bland" scene, the amplifier gain switches to 1.00 while a filtered array element output is being sampled and to 0.05 while an unfiltered array element output is being sampled. The gain settings are illustrated graphically by the time (t) graph 203 in Figure 11, assuming clock pulses are spaced according to the time (t) graph 201. Time graph 202 specifies the column 1, 2, etc. of sensors for each clock period.

The output 141, 143, etc., of a row of this matrix is a constant d.c. level for a constant intensity scene when no abnormal amount of radiation is present in the narrow filter's passband as shown in the time (t) graph 204a in Figure 11. The output becomes a square-wave with a period equal to two pixel clocks when unusual scene spectral content (high or low) exists at the passband wavelengths, as shown in time (t) graph 204b for moderate spectral differences higher than background and as shown in time (t) graph 204c for more intense spectral differences higher than background. The phase of the output signal differs by 180° for spectral differences lower than background (i.e., absorption of infrared energy), as shown in time (t) graph 204d. Two rows of a circuit (A and B) of this type are shown in detail in Figure 11, with an indication that additional rows C, D, etc., may be added in like manner.

The outputs from each row amplifier may be switched in phase with the clock so that each output from a filtered sensor is delayed one clock cycle and compared with the output from the following unfiltered sensor. The output from each row comparator may then be provided to one channel of a display processor, in analogy to the processing techniques shown in Figure 3. The column resolution in a display created in this manner is half of the column resolution of the unmodified staring array.

An alternative manner of processing the output from each row amplifier is to provide an automatic spectral-difference monitor and alarm. In this embodiment, each row output of the staring array is provided to an electrical filter 291, as shown in Figure 11. The filter 291 is tuned to any harmonic of the output waveforms 240b, 204c, and 204d of Figure 11 or to the fundamental frequency of this waveform. Tuning to the fundamental frequency is preferable, as it is a sub-harmonic of the row clock, and therefore easier to isolate from the noise of that source. The output of the filter 291 is rectified (with or without attention to phase information) by rectifier 292, amplified by amplifier 293, and passed to a level detector 294. The level detector functions as an alarm circuit by matching the detector level setting and the filter time constant to what is considered an "alert" situation, i.e., there exists a level of infrared spectral differences in an amount and for a time greater than predetermined minimums. Several levels of alert can easily be supplied; their output can drive retriggerable one shots whose outputs become suitable for summation into a video signal generated either by a parallel sensor array or by a special technique, described below, utilizing the same array as that yielding the alert information. These might, for instance, be used to provide red, yellow and blue inputs on a monitor displaying the scene in shades of grey. By addition of one shot triggering on alarm dropout, the threat area could be automatically outlined in a color representing the intensity and/or validity confidence of the alarm; that is, the amount of material present providing spectral differences.

To clean up the signals on the circuits in Figure 11 and to insure against false triggering, there must be assurance that the scene spatial (rather than spectral) content does not provide appreciable energy at the electrical bandpass filter's pass frequency. This is easily accomplished by sufficiently defocusing the optics imaging the scene on the array so that the smallest scene spot which can be resolved is at least as large in the image plane as two (one filtered and an adjacent unfiltered) sensor elements. This softness in focus will also provide some freedom from edge effects, though this function can be accomplished in the electrical bandpass filter. However, the soft focus also provides an undesirable limit on system spatial resolution and may be eliminated in some systems where a return to full normal imager operation is necessary.

Several ways exist to provide more-less normal imaging output from the specially filtered matrix. First, each row amplifier **278a, 278b**, etc. in Figure 11 could be moved past the summer **299** where the various row outputs come together. This would eliminate the requirement to replicate amplifiers **278a, 278b**, etc. for each row of the array.

There are several advantages to the circuit of Figure 11. The narrowness of the electrical bandpass filter functions to eliminate broad based noise in the sensors and thereby provide potential for a major gain in sensitivity. The automation of the alarm, coupled with its easy, natural incorporation into a normal display provides an excellent interface from a human factors standpoint. The display of a cloud of detected gas, for instance, could consist of an outline of its perimeter, with its size and position overlaid on the real world, and with relative concentrations within the cloud shown as shifts in color. This would allow quick operator evaluation of the validity of the alarm and of the extent of any problem associated with it.

To obtain the underlying video display, a sample-and-hold amplifier can be connected to the summer **299** after moving the amplifiers **278a, 278b**, etc. to a position after the summer **299**. The sample-and-hold amplifier would be controlled by signals timed to cause it to pass the unfiltered elements and to hold the level of one unfiltered element at its output until the next unfiltered element level is available at its input. The sample-and-hold circuit therefore has an output containing only information from the unfiltered elements. Unlike the amplifiers **278a, 278b**, etc., it is at full gain while connected to information from these unfiltered elements. Its output is therefore normal video exactly as could be expected from an array of elements consisting only of the unfiltered elements, spaced widely enough to leave space for the interleaved filtered elements.

This circuit is one possibility for providing the basic video signal to display the background scene. If maximum resolution of this scene is required, a separate video sensor, with optics and associated electronics, would be required. It would need to be synchronized with the special array so the alarm outputs would overlay real world scenes. This separation of functions would allow the sensors in the special array to be exposed two or more times as long as the normal video sensor. This could be highly desirable, as it would provide a sensitivity increase to make up for losses in the filter elements. In that case, genuine neutral density filters, rather than unfiltered sensors, would be preferable to prevent saturation of the unfiltered sensor elements, thereby limiting proper circuit operation. Neutral density filters may also be preferred in some circuits undergoing more normal exposure if the circuits are likely to be used under extremes which could cause the saturation of the non-filtered elements.

Finally, it will be understood that the preferred embodiments of the present invention have been disclosed by way of example, and that other modifications may occur to those skilled in the art without departing from the scope and spirit of the appended claims.

## Claims

1. In an imaging system for producing an image of infrared radiation emanating from a scene by scanning said scene across a first infrared sensor, the improvement comprising:

a second infrared sensor disposed so that it is scanned simultaneously with said first infrared sensor;

filter means interposed to permit passage of only a preselected wavelength band of said infrared radiation to a selected one of said first infrared sensor and said second infrared sensor; and

a signal comparator for comparing signals produced by said first infrared sensor and said second infrared sensor and for producing an output in response thereto;

whereby said imaging system produces an image of spectral differences present in said infrared radiation emanating from said scene.

2. In an imaging system for producing an image of infrared radiation emanating from a scene by scanning said scene along a scan line across a first infrared sensor to provide a first output signal, the improvement comprising:

a second infrared sensor for providing a second output signal, said second infrared sensor being disposed along said scan line and said scene being scanned across said second infrared sensor after said scene is scanned across said first infrared sensor;

filter means interposed to pass only a preselected wavelength band of said infrared radiation to a predetermined one of said first infrared sensor and said second infrared sensor;

delay means for providing a delayed output signal by delaying said first output signal for a predetermined period of time; and

comparing means for producing a third output signal by comparing said delayed output signal and said second output signal;

so that said imaging system produces an image of spectral differences present in said infrared radiation emanating from said scene.

3. In an imaging system for producing an image of infrared radiation emanating from a scene by scanning said scene along a scan line across a first infrared sensor to provide a first output signal, the improvement comprising:

a second infrared sensor for providing a second output signal, said second infrared sensor being disposed along said scan line and said scene being scanned across said second infrared sensor before said scene is scanned across said first infrared sensor;

filter means interposed to pass only a preselected wavelength band of said infrared radiation to a predetermined one of said first infrared sensor and said second infrared sensor;

delay means for providing a delayed output signal by delaying said first output signal for a predetermined period of time; and

comparing means for producing a third output signal by comparing said delayed output signal and said second output signal;

so that said imaging system produces an image of spectral differences present in said infrared radiation emanating from said scene.

4. The imaging system of Claim 2, wherein said delay means is a controlled drift rate device.

5. The imaging system of Claim 2, wherein said delay means is a TED sensor.

6. A method of modulating an electronic signal, comprising the steps of:

introducing said signal to be delayed at one end of a controlled drift rate device;

applying a variable voltage bias to said controlled drift rate device to cause said signal to propagate to the other end of said controlled drift rate device at a variable rate determined by said variable voltage bias; and

sensing said signal at said other end of the device.

7. A method of delaying an electronic signal, comprising the steps of:

introducing said signal at one end of an elongated TED infrared sensor;

applying a voltage bias to said TED infrared sensor to cause said signal to propagate to the other end of said TED infrared sensor in a delay time determined by said voltage bias; and

sensing said signal at said other end of the TED infrared sensor.

8. A detector for detecting spectral differences in infrared energy radiating from a scene, comprising:

imaging means for creating in an image plane an image of said infrared energy radiating from said scene;

a plurality of infrared sensors disposed in sequence in said image plane along a sampling line;

means for sampling said infrared energy incident on each of said infrared sensors along said sampling line so as to select and read an output from each of said infrared sensors sequentially in time;

a plurality of infrared filters disposed so that alternate sensors along said scanning line receive only filtered infrared energy;

a summing amplifier for combining said outputs from each of said infrared sensors into a single output signal;

tuning means for receiving said single output signal and for passing an alternating signal of a characteristic frequency while suppressing signals with frequencies different from said characteristic frequency; and

detection means for detecting a preselected amplitude of said signal passed by said tuning means and for providing an output signal responsive thereto.

9. Apparatus for producing an electrical or visual representation of a field of view characterised by means for detecting relative intensities of different spectral components of radiation received, and using the results of such detection to generate the said representation.

**Figure 1**

**Figure 2**

Figure 3

Figure 4

Scan Direction ⟶

First Sensor Set

Second Sensor Set

320a sensor → 325a amp → 340a comp → 351
330a filtered sensor → 335a amp → 350a → 351'

330b filtered sensor → 335b amp → 340b comp
320b sensor → 325b amp → 350b → 352' / 352

320c sensor → 325c amp → 340c comp → 353
330c filtered sensor → 335c amp → 350c → 353'

330d filtered sensor → 335d amp → 340d comp
320d sensor → 325d amp → 350d → 354' / 354

320e sensor → 325e amp → 340e comp → 355
330e filtered sensor → 335e amp → 350e → 355'

330f filtered sensor → 335f amp → 340f comp
320f sensor → 325f amp → 350f → 356' / 356

320g sensor → 325g amp → 340g comp → 357
330g filtered sensor → 335g amp → 350g → 357'

330h filtered sensor → 335h amp → 340h comp
320h sensor → 325h amp → 350h → 358' / 358

336

326

Figure 5

Scan Direction →

Figure 6A

Scan Direction →

Figure 6B

**Figure 7**

**Figure 8**

Scan Direction ———⟶

A •••  76a  75a  74a  73a  72a  71a  ⟶

B •••  76b  75b  74b  73b  72b  71b  ⟶

C •••  76c  75c  74c  73c  72c  71c  ⟶

D •••  76d  75d  74d  73d  72d  71d  ⟶

E •••  76e  75e  74e  73e  72e  71e  ⟶

F •••  76f  75f  74f  73f  72f  71f  ⟶

6    5    4    3    2    1

**Figure 9**

Scan Direction ———⟶

A •••  176a  175a  174a  173a  172a  171a      178a      190a              141

B •••  186a  185a  184a  183a  182a  181a      188a

C •••  176c  175c  174c  173c  172c  171c      178c      190c              143

D •••  186c  185c  184c  183c  182c  181c      188c

E •••  176e  175e  174e  173e  172e  171e      178e      190e              145

F •••  186e  185e  184e  183e  182e  181e      188e

6    5    4    3    2    1          179   189

**Figure 10**

Scan Direction ➝

Rows

A ••• 276a [ ] 285a [▨] 274a [ ] 283a [▨] 272a [ ] 281a [▨] ▷ 278a

B ••• 276b [ ] 285b [▨] 274b [ ] 283b [▨] 272b [ ] 281b [▨] ▷ 278b

Rows C, D, ...

Columns   6    5    4    3    2    1

279

299 Summer

291 Bandpass Filter

292 Rectifier

293 Amplifier

294 Level Detector

◦ 295
Alarm signal

|||||||| ← t  201

| 8 | 7 | 6 | 5 | 4 | 3 | 2 | 1 | ← t  202

1.00
0.05 ← t  203

← t  204a

← t  204b

← t  204c

← t  204d

**Figure 11**